# EUROPEAN PATENT SPECIFICATION

(11) **EP 2 036 858 B1**
(45) Date of publication and mention of the grant of the patent: **13.07.2011**
(21) Application number: 08015695.3
(22) Date of filing: 05.09.2008
(51) Int. Cl.: C01B 33/107

(54) **Method for purifying chlorosilanes**
Verfahren zum Reinigen von Chlorosilanen
Procédé de purification de chlorosilanes

(30) Priority: 05.09.2007 JP 2007229860
(43) Date of publication of application: 18.03.2009
(73) Proprietor: Shin-Etsu Chemical Co., Ltd., Tokyo 100-0004 (JP)
(72) Inventor: Uehara, Katsuhiro c/o Shin-Etsu Chemical Co.,Ltd., Joetsu-shi Niigata 942-8601 (JP); Kubota, Tohru c/o Shin-Etsu Chemical Co.,Ltd., Joetsu-shi Niigata 942-8601 (JP); Osima, Mitsuyoshi c/o Shin-Etsu Chemical Co.,Ltd., Joetsu-shi Niigata 942-8601 (JP)
(74) Representative: HOFFMANN EITLE

(56) References cited:
- GB-A- 834 380
- GB-A- 891 532
- US-A- 3 126 248
- US-A- 3 252 752
- US-A- 4 409 195
- INGLE WILLIAM M ET AL: "OXIDATIVE PURIFICATION OF CHLOROSILANE SILICON SOURCE MATERIALS." JOURNAL OF THE ELECTROCHEMICAL SOCIETY 1985 MAY, vol. 132, no. 5, May 1985 (1985-05), pages 1240-1243, XP002524310

## Description

### BACKGROUND OF THE INVENTION

### 1. Field of the Invention

The present invention relates to a method for purifying chlorosilanes, and more specifically relates to a method for obtaining high-purity chlorosilanes by removing a boron impurity and a phosphorous impurity from chlorosilanes containing these impurities.

### 2. Description of the Related Art

Generally, high purity is required to polycrystalline silicon which is used as a raw material for use in producing a semiconductor and the like. Accordingly, chlorosilanes which are used as a raw material for use in producing polycrystalline silicon are required to be in an extremely high degree of purity. When boron and phosphorous are contained as impurities in chlorosilanes, for instance, the impurities consequently give a remarkable influence on electrical characteristics (resistivity) of polycrystalline silicon, even though the amount is very small. Accordingly, it is practically largely significant to provide a technology for efficiently removing the boron impurity and the phosphorous impurity contained in chlorosilanes.

Generally, chlorosilanes are obtained by purifying raw chlorosilanes that are obtained from a metallurgical grade of silicon (which is so-called a metal grade of silicon and is referred to as "metallurgical silicon" hereafter) containing a comparatively large amount of impurities in a well-known method, into high-purity chlorosilanes further with a method of a distillation method or the like. However, boron and phosphorous are contained in the metallurgical silicon generally in an order of several hundreds ppb to several hundreds ppm in terms of the element. Accordingly, these impurities are not sufficiently removed in a step for purifying the raw chlorosilanes, and the boron and the phosphorous consequently remain in finally obtained chlorosilanes as impurities which occasionally causes a problem.

A generally well known method for obtaining raw chlorosilanes includes a process of bringing the metallurgical silicon in contact with hydrogen chloride in the presence of a catalyzer to chlorinate the metallurgical silicon, and distilling the product (see Japanese Patent Laid-Open No. 2005-67979 (Patent Document 1), for instance). The raw chlorosilanes are a fraction produced in the distillation operation, and generally form a mixture of one or more chlorosilanes selected from dichlorosilane, trichlorosilane and tetrachlorosilane.

The boron impurity and the phosphorous impurity contained in the metallurgical silicon are chlorinated at the same time when the raw chlorosilanes are produced, and are mixed into the raw chlorosilanes in the form of compounds with various structures. Chlorosilanes are obtained by purifying such raw chlorosilanes, but it is difficult to separate/remove the compounds having boiling points close to those of chlorosilanes to be finally obtained in the distillation step. For this reason, there is a case where the boron compound and the phosphorous compound are mixed into (remain in) a fraction of the distillation as impurities. When polycrystalline silicon is produced with the use of such chlorosilanes, boron and phosphorous are taken in the polycrystalline silicon, and polycrystalline silicon having desired characteristics cannot be obtained.

The main reason why boron and phosphorous which are contained in raw chlorosilanes as impurities are hardly removed through a general distillation process is that these impurities exist in the raw chlorosilanes in forms of compounds having low boiling points. Specifically, the boron and the phosphorous exist in the raw chlorosilanes usually in the forms of boron trichloride (BCl₃) and phosphorus trichloride (PCl₃) each having a low boiling point, though they can take forms of various hydrides and chlorides. Such a compound having a low boiling point cannot be easily removed from chlorosilanes through a general distillation process.

Because of this situation, various processes have been proposed as a method of reducing the content of the boron impurity and the phosphorus impurity in the raw chlorosilanes and the chlorosilanes (method for purifying chlorosilanes). For instance, National Publication of International Patent Application No. 58-500895 applied by D.R. Dee et al. (Patent Document 2) proposes a method of producing chlorosilanes having low impurity concentration, by introducing a small amount of oxygen into chlorosilanes in high temperature condition; reacting the chlorosilanes with oxygen to form a complex; making the complex react with the boron impurity and phosphorous impurity to form a new complex; and separating the new complex in a distillation step for chlorosilanes.

However, the method has problems that an operation requires a high temperature condition of 170°C or higher in order to form the complex, and cannot be performed on an easy and moderate condition.

U.S. Patent No. 3,126,248 applied by F.A. Pohl et al. (Patent Document 3) proposes a method of removing impurities by producing an adduct of an organic substance containing an element having a lone electron-pair such as benzaldehyde and valerolactone with a boron impurity and subsequently distilling the mixture.

U.S. Patent No. 3,252,752 applied by the same inventors (Patent Document 4) proposes a method of removing the impurity by making benzaldehyde, propionitrile or the like which is immobilized on an adsorbent such as activated carbon and silica gel capture and remove the boron impurity.

However, these methods are effective in decreasing the content of the boron impurity, but have a problem that the contents of all impurities including the phosphorous impurity are not simultaneously decreased when the boron impurity is removed.

Other methods than the above methods are proposed as follow:
for instance, a method of removing an impurity by bringing chlorosilanes of a liquid or gaseous state into contact with activated alumina (German patent No. 1,289,834 (Patent Document 5));
a method of adding aluminum chloride to chlorosilanes to form a PCl₅/AlCl₃ complex and distilling the mixture to purify the chlorosilanes (U.S. Patent No. 2,821,460 (Patent Document 6)); and
a method of adding a tertiary amine to chlorosilanes and distilling the mixture to purify the chlorosilanes (Japanese Patent Laid-Open No. 49-74199 (Patent Document 7)).

The other methods also include: a method of removing an impurity by bringing chlorosilanes into contact with a metal oxide such as hydrated silica gel and alumina gel (U.S. Patent No. 4,112,057 applied by Lang et al. (Patent Document 8));
a method of removing an impurity by bringing chlorosilanes into contact with an aqueous solution of an inorganic salt such as TiCl₄ or FeCl₃ (Japanese Patent Laid-Open No. 04-300206 applied by Matsubara et al. (Patent Document 9));
a method of removing an impurity by bringing chlorosilanes into contact with a fluoride salt of an alkali or alkaline earth element (Japanese Patent Laid-Open No. 2001-002407 (Patent Document 10)); and
a method of adding ethers into chlorosilanes and distilling the mixture to purify the chlorosilanes (Japanese Patent Laid-Open No. 2005-67979 applied by Koyanagi et al. (Patent Document 1)).

Any one of these methods have various problems of: needing to use a compound which is not easily handled; being incapable of obtaining satisfactory removal efficiency; needing a complicated waste treatment; causing plug-up in a pipe due to a by-product; needing to use a compound which may produce a peroxide; and being incapable of removing a boron impurity and a phosphorous impurity at the same time.

### SUMMARY OF THE INVENTION

The present invention is designed with respect to such problems, and is directed at providing a method which can highly purify chlorosilanes by simultaneously removing the boron impurity and the phosphorous impurity from the chlorosilanes containing the impurities on easy/simple and moderate conditions.

In order to solve such a problem, a method for purifying chlorosilanes according to the present invention includes: a step (A) of making chlorosilanes containing a boron impurity and a phosphorous impurity react with oxygen in the presence of an aromatic aldehyde to convert the boron impurity and the phosphorous impurity into compounds having a higher boiling point than chlorosilanes; and a step (B) of separating said compounds of boron and phosphorous from the chlorosilanes; wherein the aromatic aldehyde is a benzaldehyde derivative shown by the following chemical formula, where R represents a linear, branched or cyclic alkyl group having 1 to 30 carbon atoms or a phenyl group which may be substituted with a linear, branched or cyclic alkyl group having from 1 to 30 carbon atoms; and n is 0, 1, 2 or 3.

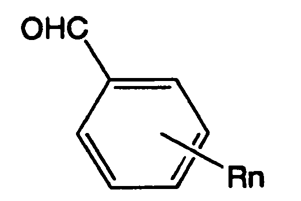

A reaction temperature in the step (A) is preferably in the range from 0°C to 150°C, and air can be used as a supply source of oxygen in the step (A).

The oxygen in the step (A) may be supplied in a form of a mixture gas obtained by diluting an oxygen-containing gas with an inert gas.

The concentration of oxygen in the mixture gas is from 0.1% to 4% by volume, for instance. The amount of oxygen ([O]) to be supplied in the step (A) is preferably 1 or more by a mole ratio with respect to the amount of the phosphorous impurity ([P]) contained in the chlorosilanes ([O]/[P] ≥ 1).

The aromatic aldehyde is a benzaldehyde derivative, for instance, and is specifically benzaldehyde or the like.

The present invention can further include a step of making chlorosilanes obtained by being separated in the step (B) circulate to the step (A).

The present invention may also include a step (C) of separating trichlorosilane from chlorosilanes obtained by being separated in the step (B).

The present invention can further include a step of making trichlorosilane obtained by being separated in the step (C) circulate to the step (A).

A method for purifying chlorosilanes according to the present invention includes: introducing oxygen (O₂) into the chlorosilanes containing a boron impurity and a phosphorous impurity in the presence of the aromatic aldehyde treating chlorosilanes; to convert the above described impurities into high boiling compounds at the same time; and separating the high boiling compounds of boron and phosphorous from the chlorosilanes by subjecting the chlorosilanes after having been treated to a distillation process or the like, and accordingly, can remove the boron impurity and the phosphorous impurity in a single process.

In addition, the above described treatment can be conducted on simple, easy and moderate conditions, and the aromatic aldehyde to be used is an additive which is easily handled and is inexpensive, so that the method for purifying chlorosilanes according to the present invention is also highly practical.

### BRIEF DESCRIPTION OF THE DRAWINGS

FIG. 1 is a view for describing a first process example of a method for purifying chlorosilanes according to the present invention; and
FIG. 2 is a view for describing a second process example of a method for purifying chlorosilanes according to the present invention.

### DESCRIPTION OF THE PREFERRED EMBODIMENTS

A method for purifying chlorosilanes according to the present invention will now be described below with reference to the drawings.

As a result of having made an extensive investigation on a method for purifying chlorosilanes including trichlorosilane, the present inventors found out that a boron impurity and a phosphorous impurity are simultaneously converted into high boiling compounds by introducing oxygen (O₂) into the chlorosilanes containing the boron impurity and the phosphorous impurity in the presence of an aromatic aldehyde to treat the chlorosilanes with the oxygen and are easily separated in the following distillation step, and accomplished the present invention. In other words, the present inventors found a method which includes: introducing oxygen (O₂) into the chlorosilanes containing the boron impurity and the phosphorous impurity in the presence of the aromatic aldehyde; treating the chlorosilanes with oxygen to convert the above described impurities into high boiling compounds; and subjecting the chlorosilanes after having been treated to a distillation process or the like to separate the high boiling compounds of boron and phosphorous from the chlorosilanes.

The high boiling compounds produced by treating the chlorosilanes containing the boron impurity and the phosphorous impurity by introducing oxygen (O₂) into the chlorosilanes in the presence of the aromatic aldehyde are not decomposed into low boiling compounds by the heat applied after the high boiling compounds having been produced. Accordingly, the high boils compounds can be easily separated from chlorosilanes through treatment such as distillation.

A method for purifying chlorosilanes according to the invention will be described below mainly on the assumption that the chlorosilanes which is an objective to be purified is trichlorosilane, but it is clear that another chlorosilanes such as dichlorosilane or tetrachlorosilane can be the objective to be purified.

In addition, the chlorosilanes to be the objective for purification according to the present invention include a wide variety of chlorosilanes. For instance, there are raw chlorosilanes which are by-products produced through a reaction of metallurgical silicon with HCl (though such chlorosilanes generally include dichlorosilane or tetrachlorosilane other than trichlorosilane); chlorosilanes from which high boiling components are removed by distilling the raw chlorosilanes; chlorosilanes from which low boiling components are removed; and fractionated trichlorosilane which is considerably purified. Any one of the above described chlorosilanes is an objective of the present invention.

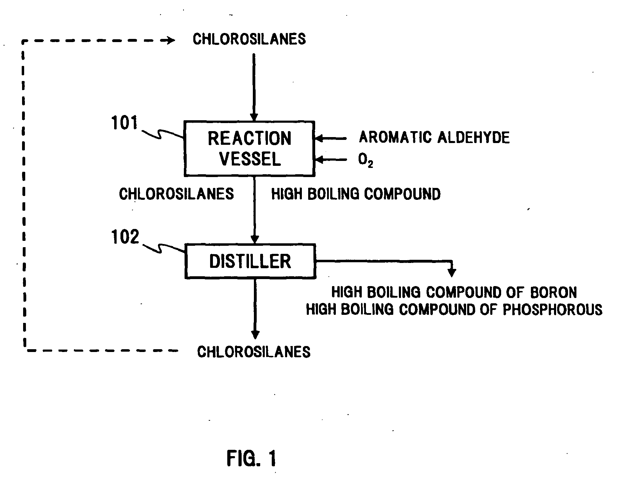

FIG. 1 is a view for describing a first process example of a method for purifying chlorosilanes according to the present invention. To a reaction vessel 101, chlorosilanes containing a boron impurity and a phosphorous impurity and oxygen are supplied, and are reacted with oxygen in the presence of an aromatic aldehyde to make the boron impurity and the phosphorous impurity converted into high boiling compounds. The chlorosilanes after having been treated in the reaction vessel 101 (and high boiling compounds of boron and phosphorus) are discharged to a distiller 102. There, the high boiling compounds of boron and phosphorous are separated from the chlorosilanes, and consequently, the chlorosilanes are purified.

The treatment temperature in the above described reaction vessel 101 is set in the range from 0°C to 150°C, for instance, and air can be used as a supply source of oxygen. Alternatively, the oxygen may be supplied in a form of a mixture gas obtained by diluting an oxygen-containing gas with an inert gas. In such a case, the concentration of oxygen in the mixture gas containing oxygen is from 0.1% to 4% by volume, for instance.

In addition, when the amount of oxygen ([O]) to be supplied into the reaction vessel 101 is set at 1 or more by a mole ratio with respect to the amount of the phosphorous impurity ([P]) contained in the chlorosilanes ([O]/[P] ≥ 1), these impurities can effectively acquire higher boiling points.

The reaction in the reaction vessel 101 is conducted in the presence of the aromatic aldehyde. A benzaldehyde derivative such as benzaldehyde can be used as the aromatic aldehyde.

It is known that the boron impurity contained in the chlorosilanes supplied to the reaction vessel 101 is typically a trivalent boron compound such as boron trichloride (BCl₃), and that the phosphorous impurity is typically a trivalent phosphorous compound such as phosphorus trichloride (PCl₃).

Conventionally, it has been well-known that benzaldehyde reacts with a boron impurity and can convert the boron impurity into a high boiling compound of boron, but the benzaldehyde could not convert a phosphorous impurity so as to acquire a higher boiling point simultaneously by the treatment. In addition, it has been conventionally known that the boron impurity and the phosphorous impurity can be converted into high boiling compounds by introducing a small amount of oxygen and treating the impurities at a high temperature condition of 170°C or higher. However, a method has not been known which converts simultaneously both of the boron impurity and the phosphorous impurity into compounds having higher boiling points by a treatment of a low temperature.

In contrast to this, a method for purifying chlorosilanes according to the present invention is based on a finding that the boron impurity and the phosphorous impurity can be converted into high boiling compounds at the same time without needing high temperature such as in a conventional method by making not only oxygen but also an aromatic aldehyde coexist in the chlorosilanes, and accordingly has a configuration according to the above described finding.

Specifically, in a reaction of converting the impurities into the above described high boiling compounds, not only BCl₃ (boiling point of 12.5°C) known as a boron impurity is converted into a high boiling compound, but also PCl₃ (boiling point of 76°C) known as a phosphorous impurity is simultaneously converted into a compound having a high boiling point equal to or higher than that of POCl₃ (boiling point of 107°C). Then, any of the high boiling compounds results in having a greatly different boiling point from those of chlorosilanes (boiling point of 31.8°C of trichlorosilane, for instance). Besides, the produced high boiling compounds are not decomposed into low boiling compounds by the heat applied later, which extremely facilitates these boron impurity and phosphorus impurity to be separated from chlorosilanes through an operation such as distillation. Such a method has a great advantage of being capable of simultaneously treating the boron impurity and the phosphorous impurity into compounds having higher boiling points on easy, simple and moderate conditions, by adding an additive which is easily handled and is inexpensive, to the chlorosilanes.

A number of moles of oxygen to be introduced into the chlorosilanes in order to convert the boron impurity and the phosphorous impurity into high boiling compounds is preferably equal to the moles of the phosphorous impurity or more. In other words, the amount of oxygen ([O]) supplied to the reaction vessel 101 is preferably 1 or more by a mole ratio with respect the amount of the phosphorous impurity ([P]) contained in the chlorosilanes ([O]/[P] ≥ 1). However, in order to enhance conversion efficiency, even in the case of batch treatment, it is more preferable to periodically add a sufficiently excessive amount of oxygen or continuously supply oxygen until the whole quantity of the phosphorous impurity is converted into a high boiling compound.

As for the introduction of the oxygen to the reaction vessel 101, a state by the gas is simple and easy. The oxygen of the gaseous state to be introduced into the reaction vessel 101 is specifically air, a gas which is air diluted by an inert gas, or a gas which is oxygen gas diluted by an inert gas. From the economic point of view, it is clear that air is preferably used as an oxygen source. However, the present reaction is a reaction of mixing high-activity hydrogenated chlorosilanes with oxygen. Accordingly it is preferable to control the concentration of oxygen in a feed gas, from the view point of securing safety against an accident originating from the rapid reaction.

On this account, it is preferable to use diluted air by the inert gas or a diluted oxygen gas by the inert gas. The inert gas to be used for dilution includes specifically nitrogen, helium and argon, but the most preferable inert gas is nitrogen for economic reasons.

The concentration of oxygen in the gas containing oxygen diluted by the inert gas having the above described purpose cannot be uniformly determined, because there are a large number of factors causing an accident. However, suppose that an explosion range is determined by a temperature at which nitrogen containing a low concentration of oxygen contacts with chlorosilanes (for instance, trichlorosilane), an upper limit of the concentration of oxygen in the mixture gas is preferably set at 4% by volume. In addition, a lower limit of the concentration of oxygen in the mixture gas is preferably set at 0.1% by volume.

The upper limit of the concentration of oxygen in the mixture gas will now be more specifically described below. The lower limit of concentration of oxygen in an explosion range of three components system of oxygen-nitrogen-trichlorosilane is in a range of 2.5 to 4 vol% in a condition range of a high temperature of a boiling point of trichlorosilane or higher to a low temperature of 0°C or lower. Accordingly, when considering a safety ratio of two times, the upper limit is preferably set in a range of 1.2 to 2 vol%. On the other hand, a practical temperature range of the upper limit is 3.2 to 3.8 vol%, so that when considering the safety ratio of two times, the upper limit is preferably 1.9 vol% or less, and is more preferably 1.6 vol% or less for higher safety.

An oxygen-containing gas to be introduced into the reaction vessel 101 preferably does not substantially include moisture. Accordingly, the oxygen-containing gas preferably uses a previously dried gas, or is preferably subjected to drying treatment with the use of a drying agent represented by silica gel, a molecular sieve and lime, before being introduced. When the oxygen-containing gas contains a large quantity of moisture, siloxane gel which is a reactant of the chlorosilanes and the moisture gradually accumulates in a pipe or the like for introducing the gas in the system, which occasionally causes a problem such as plug-up. In addition, the generated hydrogen chloride occasionally causes a problem such as corrosion of the pipe.

The aromatic aldehyde which is used in the present invention may have a low molecular weight and may be immobilized on a substrate, but is a benzaldehyde derivative shown by the following chemical formula.

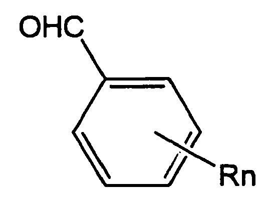

In the above described chemical formula, R represents a linear, branched or cyclic alkyl group having 1 to 30 carbon atoms or a phenyl group which may be substituted with a linear, branched or cyclic alkyl group having from 1 to 30 carbon atoms; and n is 0, 1, 2 or 3. The above R is preferably a methyl group or an ethyl group, and the above n is 0, 1 or 2.

Among the above described specific examples, the most preferable aromatic aldehyde is benzaldehyde that corresponds to the compound in which n is 0. The benzaldehyde is superior in several points of economical efficiency (being inexpensive, being industrially available, and consuming small quantity per mole due to a comparatively low molecular weight), easy handling (liquid state at room temperature, high boiling point (178°C) and safety), and reactivity (high reactivity with boron impurity, and catalytic effect for reaction of phosphorus impurity with molecule of oxygen).

The amount of the aromatic aldehyde to be added is not particularly limited, but is preferably equal mole to 1,000 times moles with respect to the total number of moles of the boron impurity and the phosphorous impurity, and is more preferably equal mole to 100 times moles. When the amount of the aromatic aldehyde is equal mole or less, the impurities are occasionally left. When the amount of the aromatic aldehyde is 1,000 times moles or more, the amount may be economically disadvantageous.

A treatment temperature after both of an oxygen-containing gas and an aromatic aldehyde have been introduced into chlorosilanes is not particularly limited, but is preferably 0°C to 150°C. When the treatment temperature is 0°C or lower, the efficiency of a reaction through which the phosphorus impurity is converted into a high boiling compound is possibly decreased. On the other hand, when the treatment temperature is 150°C or higher, the aromatic aldehyde may possibly cause a side reaction and cause a problem of safety, which is not preferable.

The pressure in a reaction vessel 101 when the mixture is treated is not particularly limited, but is preferably atmospheric pressure to 1 MPa. In addition, the mixing time for a mixture when the mixture is treated is not particularly limited, but is preferably several minutes to 24 hours in the case of a batch process. However, when the mixture is reacted in a half continuous process or a continuous process, a residence time of the treated mixture in the reaction vessel can be arbitrarily selected.

The way of introducing each of oxygen and the aromatic aldehyde into the reaction vessel 101 is not also particularly limited, but the way can be selected from various methods. The introduction methods can include, for instance: a method of mixing both of the oxygen and the aromatic aldehyde with the chlorosilanes at the same time;
a method of mixing the oxygen-containing gas with a mixture of the chlorosilanes previously added to the aromatic aldehyde; and a method of mixing the aromatic aldehyde with a mixture in a state in which the oxygen-containing gas is mixed with the chlorosilanes.

The chlorosilanes when being mixed with the oxygen-containing gas may be in a liquid state or gaseous state, but when being mixed with the aromatic aldehyde, the chlorosilanes is preferably in the liquid state. However, when the oxygen-containing gas or the aromatic aldehyde is introduced into the chlorosilanes of the liquid state, the oxygen-containing gas or the aromatic aldehyde may be supplied into the liquid or onto the surface of the liquid. The supply method is not particularly limited.

In order to enhance the efficiency of a reaction of the oxygen-containing gas and the aromatic aldehyde with the boron impurity and the phosphorus impurity contained in the chlorosilanes, it is preferable to control the whole mixture to a stirred or shaken state while the mixture is mixed or resides in the reaction vessel 101. In the above described operation, any one of the batch process, the half continuous process and the continuous process can be selected, and the operation type is not particularly limited.

A distiller 102 may be a well-known distillation device. The present process may circulate chlorosilanes obtained through the distillation operation to a reaction vessel 101, and repeat impurity removal and distillation, as needed. Here, FIG. 1 illustrates an example of a process of making the chlorosilanes circulate to a single reaction vessel 101, but it goes without saying that an additional reaction vessel and distiller may be installed in the process and the purification step may be repeated.

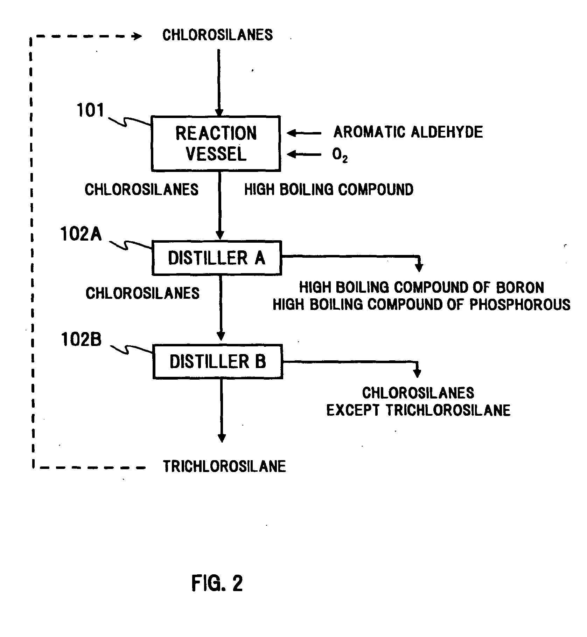

The method for purifying chlorosilanes according to the present invention may provide a plurality of distillers, have a step of separating specific chlorosilanes (trichlorosilane) from chlorosilanes after having been purified, and may further circulate the trichlorosilane produced in the separation step to the reaction vessel 101, as is illustrated in FIG. 2.

Anyway, the distillation step may be mainly directed at removing a boron impurity and a phosphorous impurity, and may further be directed at separating specific chlorosilanes (for instance, trichlorosilane) from the chlorosilanes as well. However, when the distillation step is directed at increasing a collection and utilization ratio of the chlorosilanes, any one of all steps is preferably a distillation step of separating and removing the boron impurity and the phosphorous impurity which are converted to have higher boiling points, from the chlorosilanes. By the way, as for an aromatic aldehyde, even a compound having a lowest boiling point (benzaldehyde) has a higher boiling point (178°C) than those of the chlorosilanes (dichlorosilane, trichlorosilane and tetrachlorosilane). Accordingly, even if an unreacted material would excessively remain in the mixture liquid, the aromatic aldehyde is easily separated from the chlorosilanes when having been distilled, remain in a distillation pot, and does not contaminate a fraction of the effluent of the trichlorosilane.

The above described distillation method in the present invention can be selected from among well-known apparatuses and methods without being particularly limited. A type of a distillation column, the number of distillation steps, the number of distillation columns or the like can be arbitrarily selected, for instance. In addition, any of a packed column and a plate column can be selected as the distillation column. Furthermore, any of a batch process, a half continuous process and a continuous process can be selected as a distillation process.

When the batch process has been employed, it is possible to introduce both of an oxygen-containing gas and an aromatic aldehyde into chlorosilanes containing a boron impurity and a phosphorous impurity in a distillation pot, treat both of the impurities at the same time, and then move to a distillation operation for the mixture in the state. When the continuous process has been employed, it is also possible to previously introduce both of the oxygen-containing gas and the aromatic aldehyde into the chlorosilanes in another reaction vessel, treat both of the impurities at the same time, and then continuously transfer the mixture to the distillation pot or the distillation column to distill the mixture.

High boiling compounds into which the boron impurity and the phosphorus impurity in the chlorosilanes have been converted in the above described treatment are separated from the chlorosilanes through distillation, and remain in the distillation pot as a residue. Accordingly, the high boiling compounds may be discharged to the outside of the system in accordance with the selected distillation process, and may be appropriately disposed. In addition, an unreacted part of the aromatic aldehyde is also included in the distillation residue, and accordingly may be similarly disposed.

In order to describe the present invention more specifically, examples and comparative examples will now be described below, but the present invention is not limited to the examples and the comparative examples.

### [Examples]

The following several examples and comparative examples show a specific example of converting PCl₃ into a high boiling compound by adding PCl₃ as a phosphorus impurity to trichlorosilane as chlorosilanes and applying the method according to the present invention to the mixture. Accordingly, the examples are directed at describing an effect on the phosphorous impurity, among peculiar advantages achieved by the present invention. Incidentally, the effect for a boron impurity conforms to a conventional method.

[Example 1]: An inner part of a 200 mL sample bottle was replaced with air, on a room temperature condition of 20 to 30°C, 100 g (0.738 mol) of trichlorosilane and 0.10g (1,000 ppm with respect to trichlorosilane or 7.3×10⁻⁴ mol) of PCl₃ were charged into the sample bottle, the composition of the mixture liquid was measured with gas chromatography, and the concentration of PCl₃ was examined. Subsequently, 0.41g (3.9×10⁻³ mol or 5.3 times by mole ratio of benzaldehyde/PCl₃) of benzaldehyde was charged into the sample bottle, and the sample bottle was sealed and shaken for several seconds. The sample bottle was left for 5 minutes, and the concentration of PCl₃ was similarly examined. Furthermore, the sample bottle was left for 1 hour, and the concentration of PCl₃ was similarly examined. In addition, after the concentration of PCl₃ had been measured with the gas chromatography, a space of an upper layer was replaced with air, and the bottle was sealed.

As a result, PCl₃ had been 0.09 GC% before benzaldehyde was charged, but was 0.02 GC% after 5 minutes after benzaldehyde had been charged, and vanished after 1 hour.

Among phosphorous impurities converted into high boiling compounds, POCl₃ having the lowest boiling point (boiling point of 107°C) did not exist before benzaldehyde was charged, but was 0.02 GC% 5 minutes after benzaldehyde was charged, was 0.04 GC% after 1 hour.

### [Comparative example 1]: The operation was conducted in a similar way to that in Example 1 except that the inner part of the sample bottle was replaced with nitrogen instead of air and the bottle was handled so that air could not enter the inside as much as possible, and the composition of the content was measured.

As a result, PCl₃ had been 0.08 GC% before benzaldehyde was charged, but was 0.07 GC% after 5 minutes after benzaldehyde had been charged, was 0.07 GC% after 8 hours, and was 0.07 GC% after 29 hours.

[Example 2]: An inner part of a 200 mL sample bottle was replaced with air, on a room temperature condition of 20 to 30°C, 100 g (0.738 mol) of trichlorosilane and 1.0g (1% with respect to trichlorosilane or 7.3×10⁻³ mol) of PCl₃ were charged into the sample bottle, the composition of the mixture liquid was measured with gas chromatography, and the concentration of PCl₃ was examined. Subsequently, 4.1g (3.9×10⁻² mol or 5.3 times by mole ratio of benzaldehyde/PCl₃) of benzaldehyde was charged into the sample bottle, and the sample bottle was shaken for several seconds. The sample bottle was left for 5 minutes, and the concentration of PCl₃ was similarly examined. In addition, the sample bottle was left for 2 hours and 3 hours, and the concentrations of PCl₃ were similarly examined. In addition, after the concentration of PCl₃ had been measured with the gas chromatography, a space of an upper layer was replaced with air, and the bottle was sealed.

As a result, PCl₃ had been 0.91 GC% before benzaldehyde was charged, but was 0.48 GC% 5 minutes after benzaldehyde had been charged, was 0.06 GC% after 2 hours, and vanished after 3 hours.

### [Comparative example 2]: The operation was conducted in a similar way to that in Example 2, except that the inner part of the sample bottle was replaced with nitrogen instead of air and the bottle was handled so that air could not enter the inside as much as possible, and the composition of the content was measured.

As a result, PCl₃ had been 0.93 GC% before benzaldehyde was charged, but was 0.79 GC% 5 minutes after benzaldehyde had been charged. However, the PCl₃ was 0.78 GC% even after 96 hours thereafter.

### [Comparative example 3]: The operation was conducted in a similar way to that in Example 2, except that benzaldehyde was not added.

As a result, the concentration of PCl₃ was 1.0 GC% 4 hours after a mixing operation started, and was 1.0 GC% even after 24 hours.

According to comparison between Example 1 and Comparative example 1 and between Example 2 and Comparative example 2, a phosphorous impurity (PCl₃) in chlorosilanes (trichlorosilane) rapidly vanishes on the condition that both of an oxygen-containing gas (air) and an aromatic aldehyde (benzaldehyde) coexist. However, on the condition that oxygen is not introduced (nitrogen substitution system) and only the aromatic aldehyde is introduced into the chlorosilanes, a very small amount of the phosphorous impurity (PCl₃) is decreased only immediately after the aromatic aldehyde has been mixed with the chlorosilanes, and is hardly decreased thereafter. In other words, it is understood that the phosphorous impurity cannot be converted into a high boiling compound by introducing only the aromatic aldehyde.

In addition, in Comparative example 3, the phosphorous impurity (PCl₃) in the chlorosilanes (trichlorosilane) hardly decreases on the condition that only the oxygen-containing gas (air) is introduced but the aromatic aldehyde is not introduced, under a moderate condition. In other words, the phosphorous impurity cannot be converted into the high boiling compound by introducing only the oxygen-containing gas (air).

[Example 3]: Diluted air with nitrogen (volume ratio O₂/N₂ of 16/84) was prepared by mixing air and nitrogen which were dehumidificated by silica gel. An inner part of a 650 mL sample bottle was replaced with air diluted by nitrogen, on a room temperature condition of 20 to 30°C, 100 g (0.738 mol) of trichlorosilane and 0.10g (1,000 ppm with respect to trichlorosilane or 7.3×10⁻⁴ mol) of PCl₃ were charged into the sample bottle, the composition of the mixture liquid was measured with gas chromatography, and the concentration of PCl₃ was examined. Subsequently, 0.41g (3.9×10⁻³ mol or 5.3 times by mole ratio of benzaldehyde/PCl₃) of benzaldehyde was charged into the sample bottle, and the sample bottle was sealed and shaken for several seconds. The sample bottle was left for 5 minutes, and the concentration of PCl₃ was similarly examined. Furthermore, the sample bottle was left for 1 hour and 2 hours, and the concentrations of PCl₃ were similarly examined. In addition, after the concentration of PCl₃ had been measured with the gas chromatography, a space of an upper layer was replaced with air diluted nitrogen, and the bottle was sealed.

As a result, PCl₃ had been 0.10 GC% before benzaldehyde was charged, but was 0.03 GC% 5 minutes after benzaldehyde had been charged, was 0.01 GC% after 1 hour, and vanished after 2 hours.

### [Comparative example 4]: The operation was conducted in accordance with that in Example 3, except that benzaldehyde was not added.

As a result, PCl₃ was 0.10 GC% at first, and was 0.10 GC% even after 23 hours.

[Example 4]: Diluted air with nitrogen (volume ratio O₂/N₂ of 1.6/98.4) was prepared by mixing air and nitrogen which were dehumidificated by silica gel. A device composed of a round bottom flask of 200 mL was prepared and provided with a stirrer, a thermometer, a condenser for cooling vapor with dry ice, a nozzle for introducing air diluted by nitrogen to the system (so that tip of the nozzle can be set above the liquid surface) and a side pipe of which the opening was sealed with a rubber stopper so that benzaldehyde could be added therethrough. The whole inner part of the device was sufficiently replaced with nitrogen, 200g (1.476 mol) of trichlorosilane and 0.20g (1,000 ppm with respect to trichlorosilane or 1.46×10⁻³ mol) of phosphorus trichloride (PCl₃) were charged into the device, the composition of the mixture liquid was measured with gas chromatography, and the concentration of PCl₃ was examined.

Subsequently, the above described diluted air by the nitrogen was discharged onto the surface of trichlorosilane, and a stirring operation was started at the same time. In addition, the temperature of the mixture liquid was controlled to 20 to 30°C in an oil bath. Subsequently, 0.82g (7.73×10⁻³ mol or 5.3 times by mole ratio of benzaldehyde/PCl₃) of benzaldehyde was charged into the mixture with the use of a micro syringe, and the resultant mixture was left for 30 minutes in a state of being stirred. Subsequently, the concentration of PCl₃ in the mixture liquid was examined.

As a result, PCl₃ had been 0.09 GC% before benzaldehyde was charged, but vanished 30 minutes after benzaldehyde had been charged.
[Example 5]: The experiment was conducted in accordance with that in Example 4, except that diluted oxygen by nitrogen (volume ratio O₂/N₂ of 1.6/98.4) which had been prepared by mixing oxygen and nitrogen was used instead of air diluted by nitrogen.

As a result, PCl₃ was 0.10 GC% at first, but vanished 30 minutes after benzaldehyde had been charged.

[Example 6]: Diluted air with nitrogen (volume ratio O₂/N₂ of 1.6/98.4) was prepared by mixing air and nitrogen which were dehumidificated by silica gel. A device composed of a round bottom flask of 500 mL was prepared and provided with a stirrer, a thermometer, a condenser for cooling vapor with dry ice, a nozzle for introducing air diluted by nitrogen to the system (so that tip of the nozzle can be set above the liquid surface) and a side pipe of which the opening was sealed with a rubber stopper so that benzaldehyde could be added therethrough. The whole inner part of the device was sufficiently replaced with nitrogen, 500g (3 ppm of boron content and 280 ppb of phosphorous content) of a chlorosilane mixture (mixture of dichlorosilane, trichlorosilane and tetrachlorosilane) was charged into the device.

Subsequently, the above described diluted air by the nitrogen was discharged onto the surface of the chlorosilane mixture, and a stirring operation was started at the same time. In addition, the temperature of the mixture liquid was controlled to 20 to 30°C in an oil bath. Subsequently, 0.025g (50 ppm with respect to the weight of chlorosilane mixture) of benzaldehyde was charged into the mixture with the Use of a micro syringe, and the resultant mixture was left for 30 minutes in a state of being stirred. Then, from the mixture liquid after the above described operation, 450 g of a fraction containing 90% or more trichlorosilane and 47 g of a distillation residue were obtained through a well-known distillation means.

As a result of having analyzed the fraction of distillation with an ICP (inductively coupled plasma) emission spectrophotometer, both of the concentrations of boron and phosphorous were 1 ppb or less in terms of the elements. In addition, as a result of having analyzed the distillation residue, the concentration of boron was 32 ppm, the concentration of phosphorous was 3 ppm.

The above described fraction was further fractionated which contained the low contents of the boron impurity and the phosphorous impurity, and the trichlorosilane could be obtained which contained a small quantity of the boron impurity and the phosphorous impurity and was highly purified.

[Comparative example 5]: The operation was conducted in a similar way to that in Example 6, except that the operation was conducted in nitrogen gas stream (except that air diluted by nitrogen was not used). As a result, the concentration of boron in a fraction of distillation was 1 ppb or less, and the concentration of phosphorous was 15 ppb.

When Example 6 is compared to Comparative example 5, it is understood that trichlorosilane having the low content of the boron impurity and the phosphorous impurity can be obtained by introducing both of the oxygen-containing gas and the aromatic aldehyde into the chlorosilanes constituted by trichlorosilane containing the boron impurity and the phosphorous impurity as components, treating the chlorosilanes, thereby being converted the boron impurity and the phosphorous impurity simultaneously into the above described high boiling compounds, and distilling the mixture, but that when the oxygen-containing gas is not introduced and only the aromatic aldehyde is introduced when the chlorosilanes are treated, obtained trichlorosilane contains unsatisfactorily a phosphorous impurity left.

As described above, the present invention provides a method which can highly purify chlorosilanes, by simultaneously removing a boron impurity and a phosphorous impurity from chlorosilanes containing the boron impurity and the phosphorous impurity, on easy/simple and moderate conditions.

## Claims

1. A method for purifying chlorosilanes comprising: a step (A) of making chlorosilanes containing a boron impurity and a phosphorous impurity react with oxygen in the presence of an aromatic aldehyde to convert the boron impurity and the phosphorous impurity into compounds having a higher boiling point than chlorosilanes; and a step (B) of separating said compounds of boron and phosphorous from the chlorosilanes; wherein the aromatic aldehyde is a benzaldehyde derivative shown by the following chemical formula, where R represents a linear, branched or cyclic alkyl group having 1 to 30 carbon atoms or a phenyl group which may be substituted with a linear, branched or cyclic alkyl group having from 1 to 30 carbon atoms; and n is 0, 1, 2 or 3.

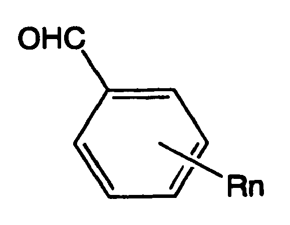

2. The method for purifying the chlorosilanes according to claim 1, wherein a reaction in the step (A) is progressed at a temperature in the range from 0°C to 150°C.

3. The method for purifying the chlorosilanes according to claim 1 or 2, wherein air is used as a supply source of oxygen in the step (A).

4. The method for purifying the chlorosilanes according to any one of claims 1 to 3, wherein the oxygen in the step (A) is supplied in a form of a mixture gas obtained by diluting an oxygen-containing gas with an inert gas.

5. The method for purifying the chlorosilanes according to claim 4, wherein the concentration of oxygen in the mixture gas is from 0.1% to 4% by volume.

6. The method for purifying the chlorosilanes according to any one of claims 1 to 5, wherein the amount of oxygen ([O]) to be supplied in the step (A) is 1 or more by a mole ratio with respect to the amount of the phosphorous impurity ([P]) contained in the chlorosilanes ([O]/[P] ≥ 1).

7. The method for purifying the chlorosilanes according to any one of claims 1-6, wherein the benzaldehyde derivative is benzaldehyde.

8. The method for purifying the chlorosilanes according to any one of claims 1 to 7, further comprising a step of making chlorosilanes obtained by being separated in the step (B) circulate to the step (A).

9. The method for purifying the chlorosilanes according to any one of claims 1 to 7, further comprising a step (C) of separating trichlorosilane from chlorosilanes obtained by being separated in the step (B).

10. The method for purifying the chlorosilanes according to claim 9, further comprising a step of making the trichlorosilane obtained by being separated in the step (C) circulate to the step (A).

## Patentansprüche

1. Verfahren zum Reinigen von Chlorosilanen, umfassend:
einen Schritt (A) des Umsetzens von Chlorosilanen, die eine Borverunreinigung und eine Phosphorverunreinigung enthalten, mit Sauerstoff in Gegenwart eines aromatischen Aldehyds, um die Borverunreinigung und die Phosphorverunreinigung in Verbindungen umzuwandeln, die einen höheren Siedepunkt als Chlorosilane haben; und einen Schritt (B) des Abtrennens der Bor- und
Phosphorverbindungen von den Chlorosilanen; worin das aromatische Aldehyd ein durch die folgende chemische Formel gezeigtes Benzaldehydderivat ist, worin R eine lineare, verzweigte oder cyclische Alkylgruppe mit 1 bis 30 Kohlenstoffatomen oder eine Phenylgruppe, die mit einer linearen, verzweigten oder cyclischen Alkylgruppe mit 1 bis 30 Kohlenstoffatomen substituiert sein kann, darstellt; und n 0, 1, 2 oder 3 ist.

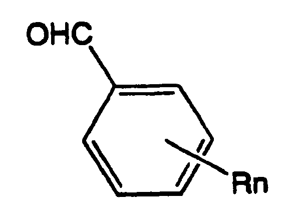

2. Verfahren zum Reinigen von Chlorosilanen gemäß Anspruch 1, worin die Reaktion im Schritt (A) bei einer Temperatur im Bereich von 0°C bis 150°C durchgeführt wird.

3. Verfahren zum Reinigen von Chlorosilanen gemäß Anspruch 1 oder 2, worin als Versorgungsquelle von Sauerstoff im Schritt (A) Luft verwendet wird.

4. Verfahren zum Reinigen von Chlorosilanen gemäß mindestens einem der Ansprüche 1 bis 3, worin der Sauerstoff im Schritt (A) in Form eines Mischgases bereitgestellt wird, das durch Verdünnen eines sauerstoffhaltigen Gases mit einem inerten Gas erhalten wird.

5. Verfahren zum Reinigen von Chlorosilanen gemäß Anspruch 4, worin die Konzentration von Sauerstoff im Mischgas von 0,1 bis 4 Vol% ist.

6. Verfahren zum Reinigen von Chlorosilanen gemäß mindestens einem der Ansprüche 1 bis 5, worin die im Schritt (A) bereitzustellende Menge an Sauerstoff ([O]) als Molverhältnis in Bezug auf die in den Chlorosilanen enthaltene Menge an Phosphorverunreinigung ([P]) 1 oder mehr ist ([O]/[P] ≥ 1).

7. Verfahren zum Reinigen von Chlorosilanen gemäß mindestens einem der Ansprüche 1 bis 6, worin das Benzaldehydderivat Benzaldehyd ist.

8. Verfahren zum Reinigen von Chlorosilanen gemäß mindestens einem der Ansprüche 1 bis 7, das weiterhin einen Schritt des Zirkulierens der durch das Abtrennen im Schritt (B) erhaltenen Chlorosilanen zum Schritt (A) umfasst.

9. Verfahren zum Reinigen von Chlorosilanen gemäß mindestens einem der Ansprüche 1 bis 7, das weiterhin einen Schritt (C) des Abtrennens von Trichlorsilan von den durch das Abtrennen im Schritt (B) erhaltenen Chlorosilanen umfasst.

10. Verfahren zum Reinigen von Chlorosilanen gemäß Anspruch 9, das weiterhin einen Schritt des Zirkulierens des durch das Abtrennen in Schritt (C) erhaltenen Trichlorsilans zum Schritt (A) umfasst.

## Revendications

1. Procédé pour purifier des chlorosilanes comprenant : une étape (A) consistant à faire réagir des chlorosilanes contenant une impureté de bore et une impureté de phosphore avec de l'oxygène en présence d'un aldéhyde aromatique pour transformer l'impureté de bore et l'impureté de phosphore en composés ayant un point d'ébullition plus élevé que des chlorosilanes ; et une étape (B) de séparation desdits composés de bore et phosphoré des chlorosilanes ; dans lequel l'aldéhyde aromatique est un dérivé de benzaldéhyde représenté par la formule chimique suivante, où R représente un groupe alkyle linéaire, ramifié ou cyclique ayant de 1 à 30 atomes de carbone ou un groupe phényle qui peut être substitué par un groupe alkyle linéaire, ramifié ou cyclique ayant de 1 à 30 atomes de carbone ; et n est 0, 1, 2 ou 3.

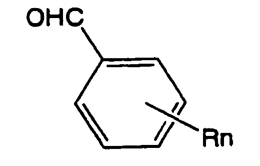

2. Procédé pour purifier des chlorosilanes selon la revendication 1, dans lequel une réaction dans l'étape (A) a lieu à une température dans la plage de 0 °C à 150 °C.

3. Procédé pour purifier des chlorosilanes selon la revendication 1 ou 2, dans lequel de l'air utilisé en tant que source d'alimentation en oxygène dans l'étape (A).

4. Procédé pour purifier des chlorosilanes selon l'une quelconque des revendications 1 à 3, dans lequel l'oxygène dans l'étape (A) est fourni sous forme d'un gaz de mélange obtenu en diluant un gaz contenant de l'oxygène avec un gaz inerte.

5. Procédé pour purifier des chlorosilanes selon la revendication 4, dans lequel la concentration en oxygène dans le gaz de mélange est de 0,1 % à 4 % en volume.

6. Procédé pour purifier des chlorosilanes selon l'une quelconque des revendications 1 à 5, dans lequel la quantité d'oxygène ([O]) à fournir dans l'étape (A) est de 1 ou plus en rapport molaire par rapport à la quantité de l'impureté de phosphore ([P]) contenue dans les chlorosilanes ([O] / [P] ≥ 1).

7. Procédé pour purifier des chlorosilanes selon l'une quelconque des revendications 1 - 6, dans lequel le dérivé de benzaldéhyde est du benzaldéhyde.

8. Procédé pour purifier des chlorosilanes selon l'une quelconque des revendications 1 à 7, comprenant en outre une étape consistant à faire circuler des chlorosilanes obtenus par séparation dans l'étape (B) vers l'étape (A).

9. Procédé pour purifier des chlorosilanes selon l'une quelconque des revendications 1 à 7, comprenant en outre une étape (C) consistant à séparer le trichlorosilane de chlorosilanes obtenus en étant séparé dans l'étape (B).

10. Procédé pour purifier des chlorosilanes selon la revendication 9, comprenant en outre une étape consistant à faire circuler le trichlorosilane obtenu en étant séparé dans l'étape (C) vers l'étape (A).
